# EUROPEAN PATENT SPECIFICATION

(11) **EP 4 212 588 B1**
(45) Date of publication and mention of the grant of the patent: **25.09.2024**
(21) Application number: 22876871.9
(22) Date of filing: 29.09.2022
(51) Int. Cl.: C08L 67/02, C08L 69/00, C08L 33/08, C08K 5/1515, C08K 3/32, C08K 3/22

(54) **THERMOPLASTIC RESIN AND MOLDED ARTICLE MADE THEREOF**
THERMOPLASTISCHES HARZ UND DARAUS HERGESTELLTER FORMKÖRPER
RÉSINE THERMOPLASTIQUE ET ARTICLE MOULÉ FABRIQUÉ À PARTIR DE CELLE-CI

(30) Priority: 30.09.2021 KR 20210129431; 28.09.2022 KR 20220123139
(43) Date of publication of application: 19.07.2023
(73) Proprietor: LG Chem, Ltd., Seoul 07336 (KR)
(72) Inventor: LEE, Hyun Seok, Daejeon 34122 (KR); SON, Sun Mo, Daejeon 34122 (KR); KO, Gun, Daejeon 34122 (KR); KONG, Seonho, Daejeon 34122 (KR)
(74) Representative: Goddar, Heinz J.
(86) International application number: PCT/KR2022/014607
(87) International publication number: WO 2023/055099

(56) References cited:
- CN-A- 110 607 060
- CN-A- 111 117 186
- CN-A- 111 117 186
- KR-A- 20070 072 372
- KR-A- 20170 005 429
- KR-A- 20180 117 990
- US-A1- 2015 368 458

## Description

### [Technical Field]

### [Cross-Reference to Related Applications]

This application claims priority to Korean Patent Application No. 10-2021-0129431, filed on September 30, 2021, and Korean Patent Application No. 10-2022-0123139, re-filed on September 28, 2022, based on the priority of the above patent, in the Korean Intellectual Property Office.

The present invention relates to a thermoplastic resin composition and a molded article manufactured using the same, and more particularly, to a thermoplastic resin composition having excellent mechanical strength, molding processability, flame retardancy, hot water resistance, and weather resistance, and a molded article manufactured using the thermoplastic resin composition.

### [Background Art]

Polycarbonate (PC) resin has excellent mechanical, physical, and optical properties and is used in various fields such as interior and exterior materials for automobiles and housings for electrical/electronic products. In particular, polycarbonate resin has excellent transparency and is applied to the manufacture of products requiring high transparency. CN 111 117 186 A relates to the technical field of engineering plastics, in particular to a flame-retardant, low-temperature impact resistant and high weather-resistant PC / PBT alloy and a preparation method thereof. Claim 1 discloses a flame-retardant, low-temperature impact-resistant and high-weather-resistant PC / PBT alloy.

However, polycarbonate resin has poor chemical resistance due to amorphous nature thereof. Accordingly, polycarbonate resin is blended with a crystalline material and applied to parts requiring chemical resistance.

In particular, in addition to excellent chemical resistance, polybutylene terephthalate (PBT) resin has rigidity similar to that of polycarbonate resin. Thus, polybutylene terephthalate (PBT) resin is widely used as a PC/PBT alloy resin.

However, under a high-temperature and high-humidity environment, polybutylene terephthalate resin is hydrolyzed, resulting in deterioration of physical properties. This phenomenon also occurs in the alloy resin.

In addition, when polycarbonate resin and polybutylene terephthalate resin are blended, transesterification reaction occurs, which causes deterioration of physical properties.

On the other hand, to prevent occurrence of fire, electrical products are required to have a flame retardancy above a certain level. However, when an impact modifier is added to enhance mechanical strength, there is a problem in that the flame retardancy of a composition is reduced.

Moreover, in addition to flame retardancy, outdoor electrical products such as electrical boxes are required to have impact resistance against external impact and resistance to high temperature, high humidity, rain, and UV according to various climatic events, severe weather conditions, and prolonged exposure to sunlight. Therefore, it is necessary to develop a material that can satisfy all of these physical properties.

### [Related Art Document]

### [Patent Document]

### KR 2003-0000778 A CN 111 117 186 A

### [Disclosure]

### [Technical Problem]

Therefore, the present invention has been made in view of the above problems, and it is one object of the present invention to provide a thermoplastic resin composition having excellent mechanical strength, molding processability, flame retardancy, hot water resistance, and weather resistance.

It is another object of the present invention to provide a molded article manufactured using the thermoplastic resin composition.

The above and other objects can be accomplished by the present invention described below.

### [Technical Solution]

In accordance with one aspect of the present invention, provided is a thermoplastic resin composition including 100 parts by weight of a base resin (A) including 1 to 99 % by weight of a polyalkylene terephthalate and 1 to 99 % by weight of a polycarbonate; 5.5 to 9 parts by weight of an impact modifier (B) having a core-shell structure; 10 to 30 parts by weight of a halogenated epoxy-based flame retardant (C); 2 to 4.5 parts by weight of a compatibilizer (D); and 0.1 to 2 parts by weight of a transesterification inhibitor (E), wherein the thermoplastic resin composition has a melt flow index of 7.0 g/10 min or more as measured at a temperature of 250 °C under a load of 5 kg according to ASTM D1238, and has a WOM value of 70 % or more as measured according to UL 746C (f1 Class).

In accordance with another aspect of the present invention, provided is a thermoplastic resin composition including 100 parts by weight of a base resin (A) including 1 to 99 % by weight of a polyalkylene terephthalate having an intrinsic viscosity (I.V.) of 0.9 to 1.3 dl/g and 1 to 99 % by weight of a polycarbonate having a melt flow index of 1 to 11 g/10 min as measured at a temperature of 250 °C under a load of 5 kg according to ASTM D1238; 5.5 to 9 parts by weight of an impact modifier (B) having a core-shell structure; 10 to 30 parts by weight of a halogenated epoxy-based flame retardant (C); 2 to 4.5 parts by weight of a compatibilizer (D); and 0.1 to 2 parts by weight of a transesterification inhibitor (E).

In accordance with still another aspect of the present invention, provided is a thermoplastic resin composition including 100 parts by weight of a base resin (A) including 1 to 99 % by weight of a polyalkylene terephthalate having an intrinsic viscosity (I.V.) of 0.9 to 1.3 dl/g and 1 to 99 % by weight of a polycarbonate having a melt flow index of 1 to 11 g/10 min as measured at a temperature of 250 °C under a load of 5 kg according to ASTM D1238; 5.5 to 9 parts by weight of an impact modifier (B); 10 to 30 parts by weight of a halogenated epoxy-based flame retardant (C); 2 to 4.5 parts by weight of a glycidyl methacrylate-based compatibilizer (D) including vinyl acrylate; and 0.1 to 2 parts by weight of a transesterification inhibitor (E), which is a monobasic phosphate.

The thermoplastic resin composition may have a WOM value of preferably 70 % or more as measured according to UL 746C (f1 Class).

The thermoplastic resin composition may have a hot water resistance index value of preferably 50 % or more as measured according to UL 746C (f1 Class).

The polyalkylene terephthalate may be preferably a polybutylene terephthalate.

The polyalkylene terephthalate may have an intrinsic viscosity (I.V.) of preferably 0.9 to 1.3 dl/g.

The polycarbonate may have a melt flow index of preferably 1 to 11 g/10 min as measured at a temperature of 250 °C under a load of 5 kg according to ASTM D1238.

The base resin may include preferably 40 to 60 % by weight of the polyalkylene terephthalate and 40 to 60 % by weight of the polycarbonate based on a total weight thereof.

The impact modifier may be preferably a butyl acrylic-based impact modifier.

The halogenated epoxy-based flame retardant may be preferably a brominated epoxy-based flame retardant.

The transesterification inhibitor may be preferably an inorganic phosphate-based compound, more preferably a monobasic phosphate, still more preferably NaH₂PO₄.

Based on 100 parts by weight of the base resin, the thermoplastic resin composition may include preferably 2 to 8 parts by weight of a flame retardant aid. The flame retardant aid may include preferably antimony trioxide.

The compatibilizer may include preferably a glycidyl methacrylate-based compatibilizer. The glycidyl methacrylate-based compatibilizer may include vinyl acrylate. In this case, based on a total weight of the glycidyl methacrylate-based compatibilizer, the vinyl acrylate may be included in an amount of preferably 1 to 20 % by weight.

Based on 100 parts by weight of the base resin, the thermoplastic resin composition may include preferably 0.05 to 3 parts by weight pf a UV stabilizer.

The UV stabilizer may be preferably a benzotriazole-based UV stabilizer.

The thermoplastic resin composition may preferably satisfy f1 Class specified in UL 746C.

In accordance with yet another aspect of the present invention, provided is a molded article including the thermoplastic resin composition.

The molded article may be preferably an electrical box.

### [Advantageous effects]

According to the present invention, the present invention has an effect of providing a thermoplastic resin composition having excellent hot water resistance and weather resistance while maintaining mechanical strength, molding processability, and flame retardancy above a certain level and thus being applicable to the manufacture of outdoor electrical products that are used for a long time and a molded article manufactured using the thermoplastic resin composition.

### [Description of Drawings]

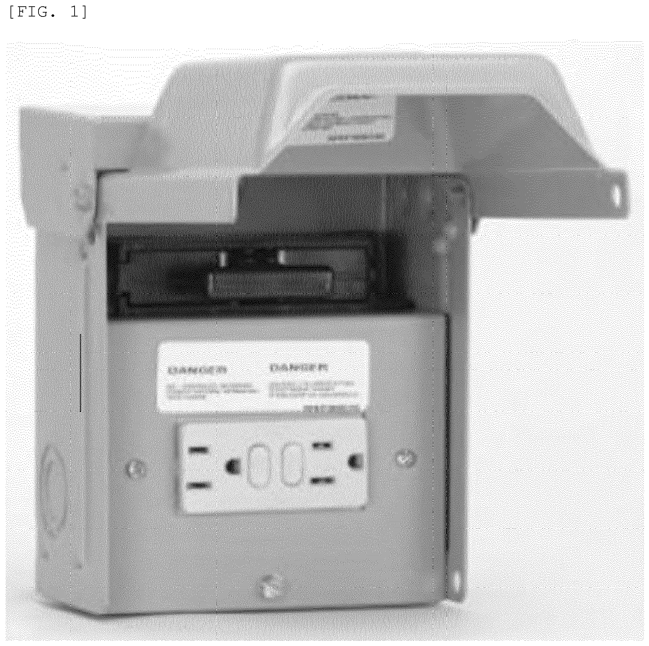

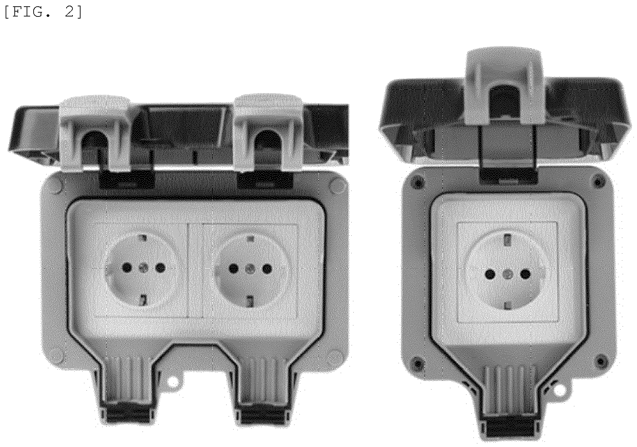

FIGS. 1 and 2 show exemplary images of outdoor electrical boxes.

### [Best mode]

Hereinafter, a thermoplastic resin composition of the present invention and a molded article including the same will be described in detail.

The present inventors studied to develop a flame retardant PC/PBT alloy resin for outdoor use. During this study, the present inventors confirmed that, when a predetermined impact modifier, flame retardant, and compatibilizer were included in a predetermined content ratio, molding processability and flame retardancy, which are in a trade-off relationship with impact resistance, were increased to a certain level or more, and weather resistance and durability in high-temperature and high-humidity environments were greatly improved. Based on these results, the present inventors conducted further studies to complete the present invention.

The thermoplastic resin composition of the present invention includes 100 parts by weight of a base resin (A) including 1 to 99 % by weight of a polyalkylene terephthalate and 1 to 99 % by weight of a polycarbonate, 5.5 to 9 parts by weight of an impact modifier (B) having a core-shell structure, 10 to 30 parts by weight of a halogenated epoxy-based flame retardant (C), 2 to 4.5 parts by weight of a compatibilizer (D), and 0.1 to 2 parts by weight of a transesterification inhibitor (E). In this case, the thermoplastic resin composition has a melt flow index of 7.0 g/10 min or more as measured at a temperature of 250 °C under a load of 5 kg according to ASTM D1238, and has a WOM value of 70 % or more as measured according to UL 746C (f1 Class). In this case, mechanical strength, such as tensile strength, flexural modulus, flexural strength, and impact strength, molding processability, and flame retardancy may be secured above a certain level, and both hot water resistance and weather resistance may be excellent.

In addition, the thermoplastic resin composition of the present invention includes 100 parts by weight of a base resin (A) including 1 to 99 % by weight of a polyalkylene terephthalate and 1 to 99 % by weight of a polycarbonate, 5.5 to 9 parts by weight of an impact modifier (B) having a core-shell structure, 10 to 30 parts by weight of a halogenated epoxy-based flame retardant (C), 2 to 4.5 parts by weight of a compatibilizer (D), and 0.1 to 2 parts by weight of a transesterification inhibitor (E). In this case, the thermoplastic resin composition has a melt flow index of 7.0 g/10 min or more as measured at a temperature of 250 °C under a load of 5 kg according to ASTM D1238, and has a hot water resistance index value of 50 % or more as measured according to UL 746C (f1 Class) . In this case, mechanical strength, such as tensile strength, flexural modulus, flexural strength, and impact strength, molding processability, and flame retardancy may be secured above a certain level, and both hot water resistance and weather resistance may be excellent.

In addition, the thermoplastic resin composition of the present invention includes 100 parts by weight of a base resin (A) including 1 to 99 % by weight of a polyalkylene terephthalate having an intrinsic viscosity (I.V.) of 0.9 to 1.3 dl/g and 1 to 99 % by weight of a polycarbonate having a melt flow index of 1 to 11 g/10 min as measured at a temperature of 250 °C under a load of 5 kg according to ASTM D1238, 5.5 to 9 parts by weight of an impact modifier (B), 10 to 30 parts by weight of a halogenated epoxy-based flame retardant (C), 2 to 4.5 parts by weight of a compatibilizer (D), and 0.1 to 2 parts by weight of a transesterification inhibitor (E). In this case, mechanical strength, such as tensile strength, flexural modulus, flexural strength, and impact strength, molding processability, and flame retardancy may be secured above a certain level, and both hot water resistance and weather resistance may be excellent.

In addition, the thermoplastic resin composition of the present invention includes 100 parts by weight of a base resin (A) including 1 to 99 % by weight of a polyalkylene terephthalate having an intrinsic viscosity (I.V.) of 0.9 to 1.3 dl/g and 1 to 99 % by weight of a polycarbonate having a melt flow index of 1 to 11 g/10 min as measured at a temperature of 250 °C under a load of 5 kg according to ASTM D1238, 5.5 to 9 parts by weight of an impact modifier (B) having a core-shell structure, 10 to 30 parts by weight of a halogenated epoxy-based flame retardant (C), 2 to 4.5 parts by weight of a glycidyl methacrylate-based compatibilizer (D) including vinyl acrylate, and 0.1 to 2 parts by weight of a transesterification inhibitor (E), which is a monobasic phosphate. In this case, mechanical strength, such as tensile strength, flexural modulus, flexural strength, and impact strength, molding processability, and flame retardancy may be secured above a certain level, and both hot water resistance and weather resistance may be excellent.

In the present disclosure, a melt flow index may be measured at 250 °C for a reference time of 10 minutes under a load of 5 kg according to ASTM D1238. As a specific example, a specimen is heated to 250 °C using a melt indexer (GOETTFERT Co.), the specimen is placed in the cylinder of the melt indexer, and a load of 5 kg is applied with a piston. At this time, the weight (g) of a resin melted and flowing out for 10 minutes is measured, and a melt flow index is calculated based on the measured value.

In the present disclosure, a WOM value may be measured according to UL 746C (f1 Class). As a specific example, according to UL 746C (f1 Class) regulations, using an accelerated weathering tester (weather-O-meter, ATLAS Co., Ci4000, xenon arc lamp, Quartz (inner)/S.Boro (outer) filters, irradiance of 0.35 W/m² at 340 nm, black panel temperature of 60±3 °C) satisfying ASTM G151, a process of exposing an impact specimen having a thickness of 3.2 mm to UV for 102 minutes and exposing the impact specimen to both UV and water spray for 18 minutes is set as 1 cycle, and an accelerated weathering test is performed for 1,000 hours. At this time, a WOM value may be expressed as the retention (%) of impact strength (according to ASTM D256) measured before and after the accelerated weathering test.

In the present disclosure, a hot water resistance index value may be measured according to UL 746C (f1 Class). As a specific example, according to UL 746C (f1 Class) regulations, a hot water resistance test is performed by completely immersing an impact specimen having a thickness of 3.2 mm in 70 °C deionized water, leaving the impact specimen to stand for 7 days, taking the impact specimen out, and then immersing the impact specimen in 23 °C deionized water for 30 minutes. At this time, a hot water resistance index value may be expressed as the retention (%) of impact strength (according to ASTM D256) measured before and after the hot water resistance test.

In the present disclosure, impact strength may be measured as follows. Injection is performed under the conditions of an injection temperature (based on the inlet) of 250 °C, a mold temperature of 60 °C, a holding pressure of 60 MPa, and an injection speed of 40 MPa to obtain an impact specimen with a thickness of 3.2 mm and a notch width of 2.54 mm. Then, the impact strength of the impact specimen may be measured at 23 °C using an impact tester (Toyoseiki Co.) according to ASTM D256.

Hereinafter, each component of the thermoplastic resin composition of the present invention will be described in detail.

### (A) Base resin

Based on 100 parts by weight of the base resin, the base resin includes 1 to 99 % by weight of a polyalkylene terephthalate and 1 to 99 % by weight of a polycarbonate. As a preferred example, the base resin may include 40 to 60 % by weight of a polyalkylene terephthalate and 40 to 60 % by weight of a polycarbonate, more preferably 40 to 55 % by weight of a polyalkylene terephthalate and 45 to 60 % by weight of a polycarbonate, still more preferably 45 to 55 % by weight of a polyalkylene terephthalate and 45 to 55 % by weight of a polycarbonate. Within this range, mechanical strength, molding processability, hot water resistance, and weather resistance may be excellent.

As a preferred example, the polyalkylene terephthalate may be polybutylene terephthalate (PBT). In this case, molding processability, hot water resistance, and weather resistance may be excellent.

Polybutylene terephthalate resins commonly used in the art may be used as the polybutylene terephthalate without particular limitation. For example, the polybutylene terephthalate may be a polymer obtained by polycondensation through direct esterification or transesterification of 1,4-butanediol and terephthalic acid or dimethyl terephthalate.

For example, as the polybutylene terephthalate, a copolymer obtained by copolymerizing the polybutylene terephthalate resin and an impact strength enhancing compound such as polytetramethylene glycol, polyethylene glycol, polypropylene glycol, aliphatic polyester, and aliphatic polyamide, or a modified polybutylene terephthalate obtained by mixing the polybutylene terephthalate and the impact strength enhancing compound may be used. In this case, hot water resistance and weather resistance may be further improved without deterioration of other physical properties.

As another example, the polyalkylene terephthalate may include one or more selected from the group consisting of polyethylene terephthalate (PET) and polytrimethylene terephthalate (PTT), or a mixture of the polybutylene terephthalate and the one or more compounds. In this case, molding processability may be further improved.

For example, the polyalkylene terephthalate may have an intrinsic viscosity (I.V.) of 0.9 to 1.3 dl/g, preferably 0.9 to 1.25 dl/g, more preferably 0.95 to 1.25 dl/g. Within this range, the composition may have excellent molding processability, tensile strength, flexural modulus, and molding processability.

For example, the polyalkylene terephthalate may have an intrinsic viscosity (I.V.) of 1.1 to 1.5 dl/g, preferably 1.1 to 1.4 dl/g, more preferably 1.2 to 1.4 dl/g. Within this range, the composition may have excellent impact strength, tensile strength, flexural modulus, and molding processability.

In the present disclosure, when intrinsic viscosity is measured, unless noted otherwise, a sample solution with a concentration of 0.05 g/ml is prepared by completely dissolving a sample in methylene chloride as a solvent, and then is filtered using a filter to obtain a filtrate. Then, using the obtained filtrate, intrinsic viscosity is measured at 20 °C using a Ubbelohde viscometer.

For example, the polyalkylene terephthalate may have a weight average molecular weight of 30,000 to 100,000 g/mol, 40,000 to 80,000 g/mol, or 45,000 to 70,000 g/mol. Within this range, mechanical properties may be excellent.

In the present disclosure, unless noted otherwise, weight average molecular weight of the polyalkylene terephthalate may be measured by gel permeation chromatography (GPC, Waters Breeze). As a specific example, weight average molecular weight may be measured using hexafluoroisopropanol (HFIP) solution including 0.01 N of sodium trifluoroacetate (NaTFA) as an eluate through GPC. In this case, weight average molecular weight is obtained as a relative value to a polymethyl methacrylate (PMMA) standard sample. A more specific measurement example is as follows.
(1) Measuring instrument: EcoSEC HLC-8320 GPC, Tosoh Co.
(2) Detector: RI-detector
(3) Solvent: HFIP + NaTFA (0.01 N)
(4) Column model: 2 × TSKgel SuperAWM-H (6.0 × 150 mm, Tosoh Co.)
(5) Column temperature: 40 °C
(6) Flow rate: 0.3 mL/min
(7) Sample concentration: 3 mg/mL
(8) Injection volume: 100 µl
(9) Data processing: EcoSEC software
(10) Standard sample: PMMA

A method of preparing a polyalkylene terephthalate commonly used in this technical field may be used to prepare the polyalkylene terephthalate without particular limitation. Commercially available products may also be used as long as the products follow the definition of the present invention.

The polycarbonate may have a melt flow index of 1 to 11 /10 min, preferably 3 to 10 g/10 min, or 1 to 8 g/10 min, more preferably 2 to 5 g/10 min as measured at a temperature of 300 °C under a load of 1.2 kg according to ISO 1133. Within this range, mechanical strength and molding processability may be excellent.

For example, the polycarbonate may have a weight average molecular weight of 2,000 to 40,000 g/mol, preferably 30,000 to 40,000 g/mol, more preferably 32,000 to 38,000 g/mol. Within this range, mechanical strength and physical property balance may be excellent.

In the present disclosure, unless noted otherwise, weight average molecular weight of a polycarbonate may be measured using tetrahydrofuran (THF) as an eluate through gel permeation chromatography (GPC, Waters Breeze). In this case, weight average molecular weight may be obtained as a relative value to a polystyrene (PS) standard sample. Specific measurement conditions are as follows: solvent: THF, column temperature: 40 °C, flow rate: 0.3 ml/min, sample concentration: 20 mg/ml, injection amount: 5 µl, column model: 1×PLgel 10 µm MiniMix-B (250×4.6 mm) + 1×PLgel 10 µm MiniMix-B (250×4.6 mm) + 1×PLgel 10 µm MiniMix-B Guard (50×4.6 mm), equipment name: Agilent 1200 series system, refractive index detector: Agilent G1362 RID, RI temperature: 35 °C, data processing: Agilent ChemStation S/W, and test method (Mn, Mw and PDI): OECD TG 118.

For example, the polycarbonate may have an intrinsic viscosity of 2.0 to 3.5 dl/g, preferably 2.2 to 3.3 dl/g, more preferably 2.5 to 3.0 dl/g. Within this range, mechanical strength and physical property balance may be excellent.

For example, the polycarbonate may have an impact strength of 50 kg·cm/cm or more, preferably 50 to 80 kg-cm/cm, more preferably 65 to 75 kg-cm/cm as measured at a temperature of 23 °C using a specimen having a thickness of 1/8" according to ASTM D256. Within this range, mechanical properties may be excellent without deterioration of other physical properties.

The type of the polycarbonate is not particularly limited. For example, the polycarbonate may be a resin prepared by polymerizing a bisphenol-based monomer and a carbonate precursor.

For example, the bisphenol-based monomer may include one or more selected from the group consisting of bis(4-hydroxyphenyl)methane, bis(4-hydroxyphenyl)ether, bis(4-hydroxyphenyl)sulfone, bis(4-hydroxyphenyl)sulfoxide, bis(4-hydroxyphenyl)sulfide, bis(4-hydroxyphenyl)ketone, 1,1-bis(4-hydroxyphenyl)ethane, 2,2-bis(4-hydroxyphenyl)propane (bisphenol A; BPA), 2,2-bis(4-hydroxyphenyl)butane, 1,1-bis(4-hydroxyphenyl)cyclohexane (bisphenol Z; BPZ), 2,2-bis(4-hydroxy-3,5-dibromophenyl)propane, 2,2-bis(4-hydroxy-3,5-dichlorophenyl)propane, 2,2-bis(4-hydroxy-3-bromophenyl)propane, 2,2-bis(4-hydroxy-3chlorophenyl)propane, 2,2-bis(4-hydroxy-3-methylphenyl)propane, 2,2-bis(4-hydroxy-3,5-dimethylphenyl)propane, 1,1-bis(4-hydroxyphenyl)-1-phenylethane, bis(4-hydroxyphenyl)diphenylmethane, and α,ω-bis[3-(o-hydroxyphenyl)propyl]polydimethylsiloxane.

For example, the carbonate precursor may include one or more selected from the group consisting of dimethyl carbonate, diethyl carbonate, dibutyl carbonate, dicyclohexyl carbonate, diphenyl carbonate, ditolyl carbonate, bis(chlorophenyl) carbonate, m-cresyl carbonate, dinaphthyl carbonate, bis(diphenyl) carbonate, carbonyl chloride (phosgene), triphosgene, diphosgene, carbonyl bromide, and bishaloformate.

For example, the polycarbonate may include one or more selected from the group consisting of a linear polycarbonate resin, a branched polycarbonate resin, and a polyester-carbonate copolymer resin, and preferably is a linear polycarbonate resin. In this case, due to improvement in fluidity, molding processability and appearance may be excellent.

As a preferred example, the linear polycarbonate resin may be a bisphenol A-based a polycarbonate resin.

A method of preparing a polycarbonate commonly used in this technical field may be used to prepare the polycarbonate without particular limitation. Commercially available products may also be used as long as the products follow the definition of the present invention.

### (B) Impact modifier having core-shell structure

The impact modifier having a core-shell structure is included in an amount of 5.5 to 9 parts by weight. As a preferred example, the impact modifier may be included in an amount of 5.7 to 9 parts by weight, more preferably 6 to 8.8 parts by weight, still more preferably 6 to 7.5 parts by weight. Within this range, mechanical strength, molding processability, hot water resistance, and weather resistance may be excellent.

In the present disclosure, core-shell structure may follow the definition of a core-shell structure known in the art to which the present invention pertains. For example, core-shell structure may be defined as a structure obtained by graft-polymerizing a monomer in the presence of rubber, or may be defined as a multi-layer structure having two or more layers confirmed by an analysis apparatus such as a transmission electron microscope (TEM) or a scanning electron microscope (SEM).

For example, the impact modifier having a core-shell structure may be a butyl acrylic-based impact modifier including a butyl acrylate rubber core. In this case, mechanical strength may be excellent without deterioration of other physical properties.

For example, based on its total weight, the butyl acrylic-based impact modifier may include 50 to 80 % by weight, preferably 55 to 75 % by weight, more preferably 60 to 75 % by weight of butyl acrylate rubber. In this case, mechanical strength, hot water resistance, and weather resistance may be excellent.

For example, the impact modifier having a core-shell structure may include a butyl acrylic-based impact modifier including a butyl acrylate rubber core, but may not include an ethylene-(butyl) acrylate copolymer. In this case, compared to a case in which an impact modifier containing the ethylene-(butyl) acrylate copolymer is included, mechanical strength, such as tensile strength, flexural modulus, and flexural strength, hot water resistance, and weather resistance may be excellent.

For example, the core included in the impact modifier having a core-shell structure may have a DLS average particle diameter of 80 to 200 nm, more preferably 90 to 150 nm, still more preferably 100 to 140 nm, still more preferably 120 to 140 nm. In this case, mechanical strength, hot water resistance, and weather resistance may be excellent.

For example, the core included in the impact modifier having a core-shell structure may have a TEM average particle diameter of 50 to 140 nm, more preferably 60 to 110 nm, still more preferably 70 to 100 nm, still more preferably 80 to 95 nm. In this case, mechanical strength, hot water resistance, and weather resistance may be excellent.

In the present disclosure, DLS average particle diameter may be measured by dynamic light scattering, and specifically, may be measured as an intensity value using a sample in the form of latex and using a particle size analyzer (Nicomp CW380, PPS Co.) in a Gaussian mode. As a specific example, 0.1 g of latex having a solids content of 35 to 50 % by weight is diluted with 100 g of deionized water to prepare a sample, and the DLS average particle diameter of the sample is measured at 23 °C using a particle size analyzer (Nicomp CW380, PPS Co.) in a measurement mode of dynamic light scattering/intensity 300 kHz/intensity-weight Gaussian analysis according to a measurement method using auto-dilution and flow cells.

In the present disclosure, TEM average particle diameter may be measured by transmission electron microscope (TEM) analysis. Specifically, the TEM average particle diameter refers to a value obtained by numerically measuring particle size on a high magnification image of a TEM and averaging the measurement results. A specific measurement example is as follows:
- Sample preparation: A thermoplastic resin or a thermoplastic resin composition prepared using an extrusion kneader
- Sample pretreatment: Trimming (23 °C) → hydrazine treatment (72 °C, 5 days) → sectioning (-120 °C) ---> OsO₄ vapor staining for 2 hours
- Analyzer: TEM (JEM-1400, Jeol Co.)
- Analysis conditions: Acc. Volt: 120 kV, spot size: 1 (× 10K, × 25K, × 50K)
- Size (average particle diameter) measurement: An average value of a largest diameter of particles in the top 10 % of a particle diameter distribution is measured.

Here, the average value of a largest diameter of particles in the top 10 % of a particle diameter distribution may mean an arithmetic mean value of the top 10 % of each largest diameter of 100 or more particles randomly selected from a TEM image.

For example, the core included in the impact modifier having a core-shell structure may be rubber having a glass transition temperature of -50 to -20 °C. The glass transition temperature may be preferably -45 to -23 °C, more preferably -40 to -25 °C. Within this range, impact strength may be excellent without deterioration of other physical properties.

In the present disclosure, glass transition temperature may be measured at a temperature increasing rate of 10 °C/min using a differential scanning calorimeter (Q100 DSC, TA Instruments Co.) according to ASTM D 3418.

For example, the impact modifier having a core-shell structure may include a shell prepared including one or more selected from the group consisting of an aromatic vinyl compound, a vinyl cyanide compound, and an alkyl methacrylate, and preferably a shell prepared including an aromatic vinyl compound and a vinyl cyanide compound. In this case, mechanical strength may be excellent.

In the present disclosure, a polymer including a certain compound means a polymer prepared by polymerizing the compound, and a unit in the polymer is derived from the compound.

In the present disclosure, for example, the aromatic vinyl compound may include one or more selected from the group consisting of styrene, α-methylstyrene, m-methylstyrene, p-methylstyrene, and p-tert-butylstyrene, preferably styrene.

In the present disclosure, for example, the vinyl cyanide compound may include one or more selected from the group consisting of acrylonitrile, methacrylonitrile, ethylacrylonitrile, and isopropylacrylonitrile, preferably acrylonitrile.

In the present disclosure, for example, the alkyl methacrylate may be an alkyl methacrylate containing an alkyl group having 1 to 15 carbon atoms. As a specific example, the alkyl methacrylate may include one or more selected from the group consisting of methyl methacrylate, ethyl methacrylate, butyl methacrylate, 2-ethylbutyl methacrylate, 2-ethylhexyl methacrylate, and lauryl methacrylate, preferably an alkyl methacrylate containing a chain alkyl group having 1 to 4 carbon atoms, more preferably methyl methacrylate.

For example, the impact modifier having a core-shell structure may be prepared by emulsion polymerization. In this case, chemical resistance, weather resistance, fluidity, tensile strength, and impact strength may be excellent. The emulsion polymerization may be performed using an emulsion graft polymerization method commonly practiced in the art to which the present invention pertains, without particular limitation.

As another example, as the impact modifier having a core-shell structure, commercially available products may also be used as long as the products follow the definition of the present invention.

### (C) Halogenated epoxy-based flame retardant

The halogenated epoxy-based flame retardant is included in an amount of 10 to 30 parts by weight. As a preferred example, the halogenated epoxy-based flame retardant may be included in an amount of 12 to 27 parts by weight, more preferably 13 to 25 parts by weight. Within this range, mechanical strength, molding processability, hot water resistance, and weather resistance may be excellent.

For example, the halogenated epoxy-based flame retardant may be a brominated epoxy-based flame retardant. In this case, the composition may have excellent thermal stability and flame retardancy.

As a specific example, the brominated epoxy-based flame retardant may be a bromine-substituted epoxy-based oligomer. More specifically, the brominated epoxy-based flame retardant may be a copolymer including a bisphenol A-based compound unit having n bromine substituents, and a bisphenol A-type glycidyl ether compound unit having m bromine substituents. Here, m and n may each independently be an integer from 1 to 6, preferably an integer from 2 to 5, more preferably 4. In this case, thermal stability and flame retardancy may be excellent.

For example, the brominated epoxy-based flame retardant may have a weight average molecular weight of 800 to 5,000 g/mol, preferably 1,000 to 4,000 g/mol, more preferably 1,100 to 3,000 g/mol. Within this range, flame retardancy may be improved without deterioration of other physical properties.

The weight average molecular weight of the brominated epoxy-based flame retardant may be measured using a method of measuring weight average molecular weight commonly practiced in the art to which the present invention pertains.

A method of preparing a halogenated epoxy-based flame retardant commonly practiced in this technical field may be used to prepare the halogenated epoxy-based flame retardant without particular limitation. In addition, commercially available products may also be used as long as the products follow the definition of the present invention.

For example, in addition to the halogenated epoxy-based flame retardant, the thermoplastic resin composition of the present invention may further include a flame retardant aid. For example, the flame retardant aid may be included in an amount of 2 to 8 parts by weight, preferably 2 to 7 parts by weight, more preferably 3 to 5 parts by weight. In this case, due to interaction between the halogenated epoxy-based flame retardant and the flame retardant aid, flame retardancy may be further improved.

For example, the flame retardant aid may be an antimony-based compound. The antimony-based compound may include preferably antimony trioxide and/or antimony pentoxide, more preferably antimony trioxide. In this case, flame retardancy may be excellent without deterioration of other physical properties.

### (D) Compatibilizer

The compatibilizer is included in an amount of 2 to 4.5 parts by weight. As a preferred example, the compatibilizer may be included in an amount of 2 to 4.3 parts by weight, more preferably 2 to 4.1 parts by weight, still more preferably 2.0 to 3.2 parts by weight. Within this range, mechanical strength, molding processability, hot water resistance, and weather resistance may be excellent.

For example, the compatibilizer may act as an impact mitigating agent through interaction with the base resin. In particular, the compatibilizer may further improve mechanical strength and molding processability by controlling the crystallization rate of the polyalkylene terephthalate, which is a crystalline resin. Through this action, the compatibilizer may serve to prevent deterioration of appearance, which often occurs during an injection process.

From this point of view, the compatibilizer may include, as a preferred example, a glycidyl methacrylate-based compatibilizer. In this case, mechanical strength, in particular impact strength, may be greatly improved, and the effect of reinforcing flame retardancy may be increased.

For example, based on 100 % by weight in total of the glycidyl methacrylate-based compatibilizer, the glycidyl methacrylate compound may be included in an amount of 20 % by weight or less, preferably 3 to 20 % by weight, more preferably 5 to 15 % by weight, still more preferably 8 to 12 % by weight. In this case, mechanical strength and flame retardancy may be greatly improved.

For example, the glycidyl methacrylate-based compatibilizer may include vinyl acrylate. In this case, mechanical strength, hot water resistance, and weather resistance may be excellent.

For example, based on a total weight of the glycidyl methacrylate-based compatibilizer, vinyl acrylate may be included in an amount of 1 to 20 % by weight, preferably 1 to 15 % by weight, more preferably 3 to 10 % by weight. In this case, mechanical strength, hot water resistance, and weather resistance may be excellent without deterioration of other physical properties.

As a preferred example, the glycidyl methacrylate-based compatibilizer may be a copolymer prepared by polymerizing glycidyl methacrylate, an olefin-based compound, and vinyl acetate, more preferably an ethylene-glycidyl methacrylate copolymer onto which vinyl acetate is grafted. In this case, mechanical strength, molding processability, flame retardancy, hot water resistance, and weather resistance may be excellent without deterioration of other physical properties.

For example, the glycidyl methacrylate-based compatibilizer may further include maleic acid or maleic anhydride. In this case, heat resistance and physical property balance may be excellent.

For example, the compatibilizer may have a melt flow index of 1 to 20 g/10 min, preferably 1 to 15 g/10 min, more preferably 5 to 10 g/10 min as measured at a temperature of 190 °C under a load of 2.16 kg according to ASTM D1238. Within this range, mechanical strength and molding processability may be excellent.

For example, the compatibilizer may have a glass transition temperature of -50 to 0 °C, preferably -40 to - 10 °C, more preferably -35 to -20 °C. Within this range, mechanical strength and molding processability may be excellent.

A method of preparing a glycidyl methacrylate-based compatibilizer commonly practiced in this technical field may be used to prepare the glycidyl methacrylate-based compatibilizer without particular limitation. In addition, commercially available products may also be used as long as the products follow the definition of the present invention.

### (E) Transesterification inhibitor

The transesterification inhibitor is included in an amount of 0.1 to 2.0 parts by weight. As a preferred example, the transesterification inhibitor may be included in an amount of 0.1 to 1.4 parts by weight, more preferably 0.2 to 0.8 parts by weight. Within this range, mechanical strength, molding processability, hot water resistance, and weather resistance may be excellent.

For example, the transesterification inhibitor may inhibit transesterification between a carbonate unit of the polycarbonate and an ester unit of the polyalkylene terephthalate included in the base resin, thereby preventing deterioration of physical properties due to transesterification. In addition, the transesterification inhibitor may prevent decomposition of the base resin, thereby improving heat resistance and weather resistance.

For example, the transesterification inhibitor may be a phosphate-based compound, preferably an inorganic phosphate-based compound. In this case, the effect of preventing decomposition of the base resin and the effect of improving hot water resistance may be excellent. In addition, by suppressing discoloration of the composition that may occur during a kneading and molding process, a desired color may be expressed more easily, and appearance may be excellent.

The inorganic phosphate-based compound may be preferably a monobasic phosphate, more preferably a monobasic phosphoric acid alkali metal salt, more preferably NaH₂PO₄. In this case, the effect of preventing decomposition of the base resin may be further improved, and in particular, hot water resistance may be greatly improved. In addition, by suppressing discoloration of the composition that may occur during a kneading and molding process, a desired color may be expressed more easily, and appearance may be excellent.

For example, when an organic phosphate-based compound is included in the transesterification inhibitor, in the process of kneading and molding the composition, the composition may react with the flame retardant aid to darken the color of pellets. In this case, when a pigment or the like is added, it may be difficult to express a desired color due to the darkened color of the pellets. As a specific example, the organic phosphate-based compound may refer to a phosphate compound having one or more organic substituents such as an alkyl phosphate and an aryl phosphate.

For example, in addition to the monobasic phosphoric acid alkali metal salt, the transesterification inhibitor may further include one or more selected from the group consisting of carbodiimide, zinc hydrogenphosphate, hydroxybenzophenone, and methyl salicylate. In this case, hot water resistance and mechanical strength may be excellent.

### (F) UV stabilizer

Preferably, the thermoplastic resin composition may further include a UV stabilizer. As a specific example, the thermoplastic resin composition may include the UV stabilizer in an amount of 0.1 to 2.0 parts by weight, preferably 0.1 to 1.4 parts by weight, more preferably 0.2 to 0.8 parts by weight. Within this range, hot water resistance and weather resistance may be excellent without deterioration of other physical properties.

For example, the UV stabilizer may be one or more selected from the group consisting of a benzotriazole-based UV stabilizer, a triazine-based UV stabilizer, a benzophenone-based UV stabilizer, a quinolinone-based UV stabilizer, a benzoate-based UV stabilizer, a cyanoacrylate-based UV stabilizer, and a benzoxazole-based UV stabilizer, preferably one or more selected from the group consisting of a benzotriazole-based UV stabilizer and a triazine-based UV stabilizer, more preferably a benzotriazole-based UV stabilizer. In this case, weather resistance may be excellent without deterioration of other physical properties.

For example, the benzotriazole-based UV stabilizer may be a hydroxybenzotriazole-based compound, preferably a 2-(2'-hydroxyphenyl)benzotriazole-based compound. As a specific example, the benzotriazole-based UV stabilizer may be one or more selected from the group consisting of 2-(3',5'-bis(1-methyl-1-phenylethyl)-2'-hydroxyphenyl)benzotriazole, 2-(2'-hydroxy-5'-methylphenyl)benzotriazole (CAS No. 2440-22-4), 2-(3',5'-di-tert-butyl-2'-hydroxyphenyl)benzotriazole, 2-(5'-tert-butyl-2'-hydroxyphenyl)benzotriazole, 2-(2'-hydroxy-5'-(1,1,3,3-tetramethylbutyl)phenyl)benzotriazole (CAS No. 3147-75-9), 2-(3',5'-di-tert-butyl-2'-hydroxyphenyl)-5-chlorobenzotriazole, 2-(3'-tert-butyl-2'-hydroxy-5'-methylphenyl-5-chlorobenzotriazole, 2-(3'-sec-butyl-5'-tert-butyl-2'-hydroxyphenyl)benzotriazole, 2-(2'-hydroxy-4'-octyloxyphenyl)benzotriazole, 2-(3',5'-di-tert-amyl-2'-hydroxyphenyl)benzotriazole, 2-(3',5'-bis(α,α-dimethylbenzyl)-2'-hydroxyphenyl)benzotriazole, 2-(3'-tert-butyl-2'-hydroxy-5'-(2-octyloxy-carbonylethyl)phenyl)-5-chlorobenzotriazole, 2-(3'-tert-butyl-5'-[2-(2-ethylhexyloxy)carbonylethyl]-2'-hydroxyphenyl)-5-chlorobenzotriazole, 2-(3'-tert-butyl-2'-hydroxy-5'-(2-methoxycarbonylethyl)phenyl)-5-chlorobenzotriazole, 2-(3'-tert-butyl-2'-hydroxy-5'-(2-methoxycarbonylethyl)phenyl)benzotriazole, 2-(3'-tert-butyl-2'-hydroxy-5'-(2-octyloxycarbonylethyl)phenyl)benzotriazole, 2-(3'-tert-butyl-5'-[2-(2-ethylhexyloxy)carbonylethyl]-2'-hydroxyphenyl)benzotriazole, 2-(3'-dodecyl-2'-hydroxy-5'-methylphenyl)benzotriazole, 2-(3'-tert-butyl-2'-hydroxy-5'-(2-isooctyloxycarbonylethyl)phenylbenzotriazole, 2,2'-methylenebis[4-(1,1,3,3-tetramethylbutyl)-6-benzotriazole-2-ylphenol], 2-(2H-benzotriazole-2-yl)-4,6-bis(1-methyl-1-phenylethyl)phenol (CAS No. 70321-86-7), and a transesterification product of 2-[3'-tert-butyl-5'-(2-methoxycarbonylethyl)-2'-hydroxyphenyl]-2H-benzotriazole and polyethyleneglycol, more preferably one or more selected from the group consisting of 2-(2'-hydroxy-5'-methylphenyl)benzotriazole, 2-(2'-hydroxy-5'-(1,1,3,3-tetramethylbutyl)phenyl)benzotriazole, and 2-(2H-benzotriazole-2-yl)-4,6-bis(1-methyl-1-phenylethyl)phenol, still more preferably 2-(2H-benzotriazole-2-yl)-4,6-bis(1-methyl-1-phenylethyl)phenol. In this case, weather resistance may be excellent without deterioration of other physical properties.

The triazine-based UV stabilizer may be preferably a trisaryl-1,3,5-triazine compound. As a specific example, the triazine-based UV stabilizer may be one or more selected from the group consisting of Tinuvin 360 or UV 360; Tinuvin 1577 or UV 1577 (2-[4,6-Bis(2,4-dimthylphenyl)-1,3,5-triazin-2-yl]-5-(octyloxy)phenol); Cyasorb 1164 or UV 1164; Cyasorb 2908 or UV 2908; and Cyasorb UV-3346 or UV 3346; and more preferably Tinuvin 1577 or UV 1577. In this case, weather resistance may be excellent without deterioration of other physical properties.

For example, the benzophenone-based UV stabilizer may be one or more selected from the group consisting of 2,4-dihydroxybenzophenone, 2-hydroxy-4-methoxybenzophenone, 2-hydroxy-4-octoxybenzophenone, 2-hydroxy-4-benzyloxybenzophenone, 2-hydroxy-4-methoxy-5-sulfoxybenzophenone, 2-hydroxy-4-methoxy-5-sulfoxytrihydratebenzophenone, 2-hydroxy-4-dodecyloxy-benzophenone, 2-hydroxy-4-octadecyloxy-benzophenone, 2,2'-dihydroxy-4-methoxybenzophenone, 2,2',4,4'-tetrahydroxybenzophenone, 2,2'-dihydroxy-4,4'-dimethoxybenzophenone, 2,2'-dihydroxy-4,4'-dimethoxy-5-sodiumsulfoxybenzophenone, bis(5-benzoyl-4-hydroxy-2-methoxyphenyl)methane, 2-hydroxy-4-n-dodecyloxybenzophenone, 2-hydroxy-4-methoxy-2'-carboxybenzophenone, and 4,4'-bis(diethylamino)benzophenone.

For example, the indole-based UV stabilizer may be 2-[(1-methyl-2-phenyl-1H-indole-3-yl)methylene]propanedinitrile.

For example, the quinolinone-based UV stabilizer may be 4-hydroxy-3-[(phenylimino)methyl]-2(1H)-quinolinone.

For example, the benzoate-based UV stabilizer may be one or more selected from the group consisting of 2,4-di-t-butylphenyl-3',5'-di-t-butyl-4'-hydroxybenzoate, 2,6-di-t-butylphenyl-3',5'-di-t-butyl-4'-hydroxybenzoate, n-hexadecyl-3,5-di-t-butyl-4-hydroxybenzoate, and n-octadecyl-3,5-di-t-butyl-4-hydroxybenzoate.

For example, the cyanoacrylate-based UV stabilizer may be 2'-ethylhexyl-2-cyano-3,3-diphenylacrylate, ethyl-2-cyano-3-(3',4'-methylenedioxyphenyl)-acrylate, or a mixture thereof.

For example, the UV stabilizer may have a molecular weight of 350 to 600 g/mol, preferably 400 to 550 g/mol, more preferably 420 to 470 g/mol. Within this range, due to high absorption in the wavelength range of 400 nm or less, preferably in the wavelength range of 280 to 360 nm, weather resistance may be excellent.

The molecular weight of the UV stabilizer may be calculated based on a molecular formula. When necessary, the molecular weight of the UV stabilizer may be measured using a method of measuring molecular weight commonly practiced in the art to which the present invention pertains.

### Thermoplastic resin composition

The thermoplastic resin composition of the present invention having the above-defined composition may have a melt flow index of 7.0 g/10 min or more as measured at a temperature of 250 °C under a load of 5 kg according to ASTM D1238, indicating that the thermoplastic resin composition has excellent molding processability. In addition, the thermoplastic resin composition may have a WOM value of 70 % or more as measured according to UL 746C (f1 Class), indicating that the thermoplastic resin composition has excellent weather resistance.

In addition, the thermoplastic resin composition of the present invention having the above-defined composition may have a melt flow index of 7.0 g/10 min or more as measured at a temperature of 250 °C under a load of 5 kg according to ASTM D1238, indicating that the thermoplastic resin composition has excellent molding processability. In addition, the thermoplastic resin composition may have a hot water resistance index value of 50 % or more as measured according to UL 746C (f1 Class), indicating that the thermoplastic resin composition has excellent hot water resistance.

In addition, the thermoplastic resin composition of the present invention may include 100 parts by weight of a base resin (A) including 1 to 99 % by weight of a polyalkylene terephthalate having an intrinsic viscosity (I.V.) of 0.9 to 1.3 dl/g and 1 to 99 % by weight of a polycarbonate having a melt flow index of 1 to 11 g/10 min as measured at a temperature of 250 °C under a load of 5 kg according to ASTM D1238, 5.5 to 9 parts by weight of an impact modifier (B) having a core-shell structure, 10 to 30 parts by weight of a halogenated epoxy-based flame retardant (C), 2 to 4.5 parts by weight of a compatibilizer (D), and 0.1 to 2 parts by weight of a transesterification inhibitor (E). In this case, mechanical strength, molding processability, and flame retardancy may be secured above a certain level, and hot water resistance and weather resistance may be greatly improved. Thus, the thermoplastic resin composition may be applied to the manufacture of outdoor electrical products that are used for a long time.

As a specific example, the thermoplastic resin composition of the present invention may include a brominated epoxy-based flame retardant as the halogenated epoxy-based flame retardant, and further includes an antimony-based compound, preferably antimony trioxide, as the flame retardant aid. The thermoplastic resin composition may include an inorganic phosphate-based compound, preferably a monobasic phosphoric acid alkali metal salt, as the transesterification inhibitor, and may be free of an organic phosphate-based compound, i.e., the thermoplastic resin composition does not include an organic phosphate-based compound. In this case, discoloration may be suppressed without deterioration of other physical properties, and thus appearance may be excellent.

In the present disclosure, free of an organic phosphate-based compound means that an organic phosphate-based compound is not artificially included in the thermoplastic resin composition. Specifically, free of an organic phosphate-based compound means that an organic phosphate-based compound is included in the thermoplastic resin composition in an amount of less than 0.1 % by weight or 0 % by weight.

As a specific example, the thermoplastic resin composition of the present invention may include a butyl acrylic-based impact modifier as the impact modifier having a core-shell structure, and may be free of an ethylene-(butyl) acrylate copolymer, i.e., the thermoplastic resin composition does not include an ethylene-(butyl) acrylate copolymer. In this case, mechanical strength, such as tensile strength, flexural modulus, and flexural strength, hot water resistance, and weather resistance may be excellent.

For example, the thermoplastic resin composition may have a melt flow index (250 °C, 5 kg) of 7.0 to 20 g/10 min, preferably 7.0 to 17 g/10 min, more preferably 7.3 to 17 g/10 min, still more preferably 8.2 to 14 g/10 min. In this case, molding processability and the appearance of a molded article may be excellent without deterioration of other physical properties

The thermoplastic resin composition may have a WOM value of preferably 70 to 100 %, more preferably 75 to 95 %, still more preferably 80 to 93 %, still more preferably 81.1 to 90 % as measured according to UL 746C (f1 Class). As a preferred example, the WOM value of the thermoplastic resin composition may be 78 to 99 %, more preferably 85 to 98%, still more preferably 90 to 98%. In this case, mechanical strength, molding processability, flame retardancy, hot water resistance, and weather resistance may be excellent.

The thermoplastic resin composition may have a hot water resistance index value of preferably 50 to 100 %, more preferably 60 to 95 %, still more preferably 70 to 90 % as measured according to UL 746C (f1 Class). As a preferred example, the hot water resistance index value of the thermoplastic resin composition may be 75 to 98 %, more preferably 78 to 95 %, still more preferably 80 to 93 %. In this case, mechanical strength, molding processability, flame retardancy, hot water resistance, and weather resistance may be excellent.

As a preferred example, the thermoplastic resin composition may have a flame retardancy (specimen thickness: 0.8 mm) of grade V-1 or higher, more preferably grade V-0 or higher as measured according to UL 94 standard, and may have excellent flame retardancy.

In the present disclosure, as a specific example, flame retardancy may be measured using a specimen having a size of 127 mm × 12.7 mm × 0.8 mm according to UL 94 standard (vertical burning test).

As a preferred example, when a specimen for measuring flame retardancy having a thickness of 0.8 mm is prepared using the thermoplastic resin composition and is subjected to an accelerated weathering test in the same way as the WOM value measurement method according to UL 746C (f1 Class), when the specimens before and after the accelerated weathering test are subjected to a flame retardancy test according to UL 94 standard, the specimens may have the same flame retardancy grade. In this case, even when exposed to harsh weather conditions such as UV or rain, deterioration of flame retardancy may be prevented, and an outdoor molded article having excellent flame retardancy retention may be provided.

As a preferred example, when a specimen for measuring flame retardancy having a thickness of 0.8 mm is prepared using the thermoplastic resin composition and is subjected to a hot water resistance test in the same way as the method of measuring a hot water resistance index value according to UL 746C (f1 Class), and then the specimen is additionally subjected to conditioning for 2 weeks under the conditions of a temperature of 23 °C and a relative humidity of 50 %, when the specimens before and after the hot water resistance test and additional conditioning are subjected to a flame retardancy test according to UL 94 standard, the specimens may have the same flame retardancy grade. In this case, even when exposed to hot water, deterioration of flame retardancy may be prevented, and an outdoor molded article having excellent flame retardancy retention may be provided.

As a preferred example, the thermoplastic resin composition may have a WOM value of 70 % or more and a hot water resistance index value of 50 % or more as measured according to UL 746C (f1 Class). In addition, when flame retardancy grades are measured before and after the accelerated weathering test and when flame retardancy grades are measured before and after the hot water resistance test and the additional conditioning, there is no change in the flame retardancy grade, and thus the thermoplastic resin composition may satisfy f1 Class specified in UL 746C. Accordingly, the thermoplastic resin composition may be applied to a high-impact flame-retardant material for outdoor use.

As a preferred example, the thermoplastic resin composition may have a tensile strength of 500 MPa or more, preferably 520 to 630 MPa, more preferably 525 to 620 MPa, still more preferably 535 to 600 MPa, still more preferably 537 to 590 MPa as measured using a specimen having a thickness of 3.2 mm at a temperature of 23 °C and a test speed of 50 mm/min according to ASTM D638. Within this range, mechanical strength may be excellent without deterioration of other physical properties.

In the present disclosure, as a specific example, tensile strength may be measured using a specimen having a size of 165 mm (length) × 19 mm (width) × 3.2 mm (thickness) at a temperature of 23 °C and a test speed of 50 mm/min according to ASTM D638.

As a preferred example, the thermoplastic resin composition may have a flexural modulus of 20,000 kgf/cm² or more, preferably 20,000 to 25,000 kgf/cm², more preferably 21,000 to 24,000 kgf/cm², still more preferably 21,000 to 23,000 kgf/cm² as measured using a specimen having a thickness of 3.2 mm at a test speed of 2.8 mm/min and a span of 50 according to ASTM D790. Within this range, mechanical strength may be excellent without deterioration of other physical properties.

As a preferred example, the thermoplastic resin composition may have a flexural strength of 800 kgf/cm² or more, preferably 800 to 1,000 kgf/cm², more preferably 820 to 1,000 kgf/cm², still more preferably 825 to 900 kgf/cm² as measured using a specimen having a thickness of 3.2 mm at a test speed of 2.8 mm/min and a span of 50 according to ASTM D790. Within this range, mechanical strength may be excellent without deterioration of other physical properties.

In the present disclosure, as a specific example, flexural modulus and flexural strength may be measured using a specimen having a size of 127 mm (length) × 12.7 mm (width) × 3.2 mm (thickness) at a room temperature of 23 °C, a test speed of 2.8 mm/min, and a span of 50 mm according to ASTM D790.

As a preferred example, the thermoplastic resin composition may have an impact strength of 70 kgf·cm/cm or more, preferably 70 to 100 kgf-cm/cm, more preferably 76 to 100 kgf·cm/cm, still more preferably 80 to 95 kgf·cm/cm as measured according to ASTM D256. Within this range, mechanical strength may be excellent without deterioration of other physical properties.

The thermoplastic resin composition of the present invention has excellent mechanical strength, molding processability, and flame retardancy at room temperature as described above, and thus may be applied to the manufacture of electrical products. In addition, when impact strength retention rate and flame retardancy grade retention rate before and after weather resistance and hot water resistance tests are measured, the thermoplastic resin composition satisfies f1 Class specified in UL 746C. Thus, the thermoplastic resin composition may be suitable as an impact-resistant flame-retardant material for outdoor use.

For example, the thermoplastic resin composition may have a specific gravity of 1.25 to 1.40, preferably 1.30 to 1.33 as measured at a temperature of 23 °C according to ISO 1183. Within this range, the thermoplastic resin composition may have good mechanical properties, and thus may be applied to the manufacture of a molded article such as an electrical product, as a specific example, an electrical box.

When necessary, based on 100 parts by weight of the base resin, the thermoplastic resin composition may further include one or more other additives selected from the group consisting of a lubricant, a heat stabilizer, a pigment, a release agent, an antistatic agent, an antibacterial agent, a processing aid, a metal deactivator, a flame retardant, an anti-drip agent, an anti-friction agent, and an anti-wear agent in an amount of 0.01 to 10 parts by weight, 0.05 to 7 parts by weight, 0.1 to 5 parts by weight, or 0.5 to 4.5 parts by weight. Within this range, desired physical properties may be effectively implemented without reducing the intrinsic physical properties of the thermoplastic resin composition of the present invention.

For example, the lubricant may include one or more selected from the group consisting of a fatty acid amide-based compound, montane-based wax, and olefin-based wax, preferably olefin-based wax, more preferably polyethylene wax. In this case, molding processability and mold releasability may be excellent, and friction noise resistance may be further improved.

For example, the fatty acid amide-based compound may include one or more selected from the group consisting of stearamide, behenamide, ethylene bis(stearamide), N,N'-ethylene bis(12-hydroxystearamide), erucamide, oleamide, and ethylene bis oleamide.

For example, the montane-based wax may be montane wax, montane ester wax, or a mixture thereof.

For example, the olefin-based wax may be polyethylene wax, polypropylene wax, or a mixture thereof.

For example, based on 100 parts by weight in total of the base resin (A), the impact modifier (B) having a core-shell structure, the halogenated epoxy-based flame retardant (C), the compatibilizer (D), and the transesterification inhibitor (E), the lubricant may be included in an amount of 0.05 to 1.0 part by weight, preferably 0.1 to 0.7 parts by weight, more preferably 0.1 to 0.5 parts by weight. Within this range, physical property balance and the appearance of a molded article may be excellent.

Wax conforming to the shape and/or properties of wax commonly recognized in the art to which the present invention pertains may be used as the wax of the present invention without particular limitation.

For example, the heat stabilizer may include a phenol-based heat stabilizer (antioxidant). In this case, oxidation by heat may be prevented during an extrusion process, and mechanical properties and heat resistance may be excellent.

For example, the phenol-based heat stabilizer may include one or more selected from the group consisting of N,N'-hexane-1,6-diyl-bis[3-(3,5-di-t-butyl-4-hydroxyphenyl propionamide)], pentaerythritol tetrakis[3-(3',5'-di-t-butyl-4-hydroxyphenyl)propionate] (CAS No. 6683-19-8), N,N'-hexamethylene-bis(3,5-di-t-butyl-4-hydroxyhydrocinnamamide), triethyleneglycol-bis[3-(3-t-butyl-5-methyl-4-hydroxyphenyl)propionate], 1,3,5-trimethyl-2,4,6-tris(3,5-di-t-butyl-4-hydroxybenzyl)benzene, 1,3,5-tris(4-t-butyl-3-hydroxy-2,6-dimethylbenzyl)isocyanurate, and a hindered phenol-based heat stabilizer. In this case, heat resistance may be greatly improved while maintaining physical property balance at a high level. For example, the hindered phenol-based heat stabilizer may include one or more selected from the group consisting of octadecyl 3-(3,5-di-tert-butyl-4-hydroxyphenyl)propionate (CAS No. 2082-79-3), 2,2'-methylenebis(4-methyl-6-t-butylphenol), hexamethyleneglycol-bis(3,5-di-t-butyl-4-hydroxyhydrocinnamate), triethyleneglycol-bis-3-(3-t-butyl-4-hydroxy-5-methylphenyl)propionate, 1,3,5-trimethyl-2,4,6-tris(3,5-di-t-butyl-4-hydroxy-benzyl)benzene, n-octadecyl-3-(4'-hydroxy-3',5'-di-t-butylphenol)propionate, 4,4'-methylenebis(2,6-di-t-butylphenol), 4,4'-butylidene-bis(6-t-butyl-3-methyl-phenol), distearyl-3,5-di-t-butyl-4-hydroxybenzylphosphonate, 2-t-butyl-6-(3-t-butyl-5-methyl-2-hydroxybenzyl)-4-methylphenylacrylate, and 3,9-bis{2-[3-(3-t-butyl-4-hydroxy-5-methylphenyl)propionyloxy]-1,1-dimethylethyl}-2,4,8,10-tetraoxaspiro[5,5]undecane. The heat stabilizer may be preferably pentaerythritoltetrakis[3-(3',5'-di-t-butyl-4-hydroxyphenyl)propionate], octadecyl 3-(3,5-di-tert-butyl-4-hydroxyphenyl)propionate, or a mixture thereof.

For example, based on 100 parts by weight in total of the base resin (A), the impact modifier (B) having a core-shell structure, the halogenated epoxy-based flame retardant (C), the compatibilizer (D), and the transesterification inhibitor (E), the heat stabilizer may be included in an amount of 0.05 to 1.0 part by weight, preferably 0.1 to 0.7 parts by weight, more preferably 0.1 to 0.5 parts by weight. Within this range, physical property balance may be excellent, and heat resistance may be improved.

The pigment may be an inorganic pigment or an organic pigment.

For example, the organic pigment may include one or more selected from the group consisting of a perinone-based pigment, an anthraquinone-based pigment, a perylene-based pigment, a phthalocyanine-based pigment, an azo-based pigment, an indigo-based pigment, a dioxazine-based pigment, a quinacridone-based pigment, a methane-based pigment, a quinoline-based pigment, an isoindolinone-based pigment, and a phthalone-based pigment.

For example, the inorganic pigment may include one or more selected from the group consisting of an ultramarine-based pigment, titanium dioxide, zinc sulfide, zinc oxide, iron oxide, and carbon black.

For example, as the release agent, one or more selected from the group consisting of glyceryl stearate and polyethylene tetrastearate may be used, without being limited thereto.

For example, as the antistatic agent, one or more selected from anionic surfactants and nonionic surfactants may be used, without being limited thereto.

For example, the anti-drip agent may include one or more selected from the group consisting of polytetrafluoroethylene (PTFE), a mixture (PTFE/SAN) of PTFE and a styrene-acrylonitrile (SAN) resin, a mixture (PTFE/PMMA) of PTFE and PMMA, a polyamide, polysilicon, and a tetrafluoroethylene-hexafluoropropylene (TFE-HFP) copolymer, preferably one or more selected from the group consisting of PTFE/SAN and PTFE/PMMA. In the PTFE/SAN mixture and the PTFE/PMMA mixture, the weight ratio of PTFE to the SAN resin and the weight ratio of PTFE to PMMA may be 1:0.5 to 1.5, respectively. For example, the weight ratio of PTFE to the SAN resin and the weight ration of PTFE to PMMA may be 1:1, respectively.

Antibacterial agents, processing aids, metal deactivators, flame retardants, anti-friction agents, and anti-wear agents commonly used in the art to which the present invention pertains may be used in the present invention, without particular limitation.

### Method of preparing thermoplastic resin composition

A method of preparing the thermoplastic resin composition of the present invention may include a step of melt-kneading and extruding, at 240 to 280 °C and 150 to 300 rpm, 100 parts by weight of a base resin (A) including 1 to 99 % by weight of a polyalkylene terephthalate and 1 to 99 % by weight of a polycarbonate, 5.5 to 9 parts by weight of an impact modifier (B) having a core-shell structure, 10 to 30 parts by weight of a halogenated epoxy-based flame retardant (C), 2 to 4.5 parts by weight of a compatibilizer (D), and 0.1 to 2 parts by weight of a transesterification inhibitor (E). In this case, mechanical strength, molding processability, and flame retardancy may be secured, and hot water resistance and weather resistance may be greatly improved. Thus, the thermoplastic resin composition may be applied to the manufacture of outdoor electrical products that are used for a long time.

The method of preparing the thermoplastic resin composition shares all the technical characteristics of the above-described thermoplastic resin composition. Accordingly, repeated description thereof will be omitted.

For example, the melt-kneading and extrusion step may be performed at a temperature of 240 to 280 °C and a screw rotation speed of an extruder of 150 to 300 rpm, preferably at a temperature of 245 to 270 °C and a screw rotation speed of an extruder of 170 to 260 rpm, more preferably at a temperature of 250 to 260 °C and a screw rotation speed of an extruder of 190 to 220 rpm. Within this range, desired physical properties may be sufficiently obtained.

For example, the melt-kneading and extrusion step may be performed using one or more selected from a single-screw extruder, a twin-screw extruder, and a Banbury mixer. Preferably, the melt-kneading and extrusion step may be performed by uniformly mixing and extruding the components using a twin-screw extruder to obtain the thermoplastic resin composition in pellet form. In this case, deterioration of physical properties and heat resistance may be prevented, and appearance may be excellent.

### Molded article

A molded article of the present invention includes the thermoplastic resin composition of the present invention. In this case, in addition to mechanical strength, molding processability, and flame retardancy, both hot water resistance and weather resistance may be excellent.

The molded article may be manufactured using a method of manufacturing a molded article commonly used in the art. For example, using a melt-kneaded material or pellets of the thermoplastic resin composition of the present invention as a raw material, a molding method such as injection molding, injection compression molding, extrusion molding, blow molding, press molding, air pressure molding, heat bending molding, compression molding, calender molding, or rotational molding may be applied. The size, thickness, and the like of the molded article may be appropriately adjusted according to the purpose of use.

As a specific example, the molded article may be manufactured by injecting a melt-kneaded material or pellets of the thermoplastic resin composition of the present invention using an injection machine.

For example, the injection step may be performed by injecting the melt-kneaded material or the pellets at an injection temperature of 240 to 280 °C, a mold temperature of 40 to 80 °C, and an injection speed of 10 to 50 mm/sec, preferably at an injection temperature of 245 to 270 °C, a mold temperature of 50 to 70 °C, and an injection speed of 20 to 40 mm/sec.

The molded article may have excellent mechanical strength, molding processability, and flame retardancy, and may also have excellent hot water resistance and weather resistance. Thus, the molded article may be applied to products that require high mechanical strength and flame retardancy and are frequently used in high-temperature environments and outdoors. As a specific example, the molded article may be applied to outdoor electrical products, preferably an electrical box.

FIGS. 1 and 2 below show exemplary images of electrical boxes having different shapes. Here, the image shows the electrical box door open. When the molded article of the present invention is applied to such an electrical box, long-term durability may be excellent without deterioration of physical properties for a long period of time.

In describing the thermoplastic resin composition of the present invention, the method of preparing the same, and the molded article including the same, it should be noted that other conditions or equipment not explicitly described herein may be appropriately selected within the range commonly practiced in the art without particular limitation.

Hereinafter, the present invention will be described in more detail with reference to the following preferred examples.

### [Examples]

Materials used in the following Examples and Comparative Examples are as follows.

### (A) Base resin

(A-a1) Polyalkylene terephthalate: A PBT resin (weight average molecular weight: 95,000 g/mol) having an intrinsic viscosity (20 °C) of 1.2 dl/g

(A-a2) Polyalkylene terephthalate: A PBT resin having an intrinsic viscosity (20 °C) of 0.98 dl/g

(A-a3) Polyalkylene terephthalate: A PBT resin (weight average molecular weight: 75,000 g/mol) having an intrinsic viscosity (20 °C) of 0.84 dl/g

(A-b1) Polycarbonate: A bisphenol A-type PC resin (weight average molecular weight: 70,000 g/mol) having a melt flow index (300 °C, load: 1.2 kg) of 3 g/10 min as measured according to ISO 1133

(A-b2) Polycarbonate: A bisphenol A-type PC resin having a melt flow index (300 °C, load: 1.2 kg) of 10 g/10 min as measured according to ISO 1133

(A-b3) Polycarbonate: A bisphenol A-type PC resin (weight average molecular weight: 44,000 g/mol) having a melt flow index (300 °C, load: 1.2 kg) of 15 g/10 min as measured according to ISO 1133

(B-1) Impact modifier: A BA-based impact modifier having a core-shell structure and including 60 % by weight of a core (butyl acrylate rubber) and 40 % by weight of a shell (acrylonitrile: 20 % by weight, styrene: 80 % by weight)

(B-2) Impact modifier: A poly(ethylene-butyl acrylate-glycidyl methacrylate) impact modifier (Elvaloy PTW, butyl acrylate: 27 % by weight, Dupont Co.) having a non-core-shell structure

(C-a1) Flame retardant: A brominated epoxy oligomer flame retardant (CAS No. 68928-70-1)

(C-a2) Flame retardant: A brominated aromatic carbonate oligomer flame retardant (C₂₂H₁₅Br₇Cl₂O₄)

(C-b1) Flame retardant aid: Sb₂O₃

(D-1) Compatibilizer: An ethylene-glycidyl methacrylate-vinyl acetate terpolymer (E-GMA-VA, GMA: 12 % by weight, VA: 5 % by weight)

(D-2) Compatibilizer: An ethylene-glycidyl methacrylate-n-butyl acrylate terpolymer (E-GMA-BA, GMA: 5 % by weight, BA: 28 % by weight)

(E-1) Transesterification inhibitor: NaH₂PO₄

(E-2) Transesterification inhibitor: Na₂HPO₄

(E-3) Transesterification inhibitor: Diphenyl phosphate

(F) UV stabilizer: A benzotriazole-based compound (molecular weight: 448 g/mol, absorption wavelength range: 300 to 350 nm)

(G) Additional additives: The following additional additives (G-1) to (G-3) were mixed and added in the same weight ratio (1:1:1).

(G-1) Heat stabilizer: A phenol-based antioxidant (pentaerythritol tetrakis[3-(3,5-di-tert-butyl-4-hydroxyphenyl)propionate])

(G-2) lubricant: PE-based wax (low-molecular-weight polyethylene wax)

(G-3) Anti-drip agent: polytetrafluoroethylene/PMMA (mixed in a weight ratio of 1:1)

### Examples 1 to 7 and Comparative Examples 1 to 14

The base resin (A), the impact modifier (B), the flame retardant (C), the compatibilizer (D), the transesterification inhibitor (E), the UV stabilizer (F), and the additional additives (G) were fed into a super mixer according to the contents shown in Tables 1 to 3 and mixed. The mixture was extruded at an extrusion temperature of 260 °C and a screw rotation speed of 250 rpm using a twin-screw extruder (screw diameter: 40 mm, LID = 40) to obtain pellets.

The prepared thermoplastic resin composition in pellet form was dried at 100 °C for at least 2 hours, and then was injection-molded at an injection temperature of 250 °C, a mold temperature of 60 °C, and an injection speed of 30 mm/sec using an injection machine to obtain a specimen. The specimen was left at a room temperature (20 to 26 °C) for 48 hours, and then the physical properties thereof were measured.

### [Test Examples]

The physical properties of the specimens prepared in Examples and Comparative Examples were measured according to the following methods, and the results are shown in Tables 4 to 6 below.
* Specific gravity: Specific gravity was measured using a specific gravity meter (Scott volumeter, model name: Version USP 616) according to ASTM D792.
* Tensile strength (kgf/cm²): Tensile strength was measured at a temperature of 23 °C and a test speed of 50 mm/min using a specimen having a size of 165 mm (length) × 19 mm (width) × 3.2 mm (thickness) according to ASTM D638.
* Flexural strength and flexural modulus (kgf/cm²): Flexural strength and flexural modulus were measured at a temperature of 23 °C, a test speed of 2.8 mm/min, and a span of 50 mm using a specimen having a size of 127 mm (length) × 12.7 mm (width) × 3.2 mm (thickness) according to ASTM D790.
* Impact strength (kgf-cm/cm): Impact strength was measured at a temperature of 23 °C and a notch width of 2.54 mm using a specimen having a thickness of 3.2 mm according to ASTM D256.
* Melt flow index (g/10 min): Melt flow index was measured at a temperature of 250 °C under a load of 5 kg for 10 minutes using a melting index measuring equipment (GOETTFERT Co.) according to ASTM D1238.
* Flame retardancy: Flame retardancy was measured using an injection specimen having a size of 127 mm (width) × 12.7 mm (length) × 0.8 mm (thickness) according to UL 94 standard (Vertical Burning Test).
* Appearance discoloration: By visually checking the color of the prepared extrusion pellets, it was determined whether appearance was discolored. Based on the intrinsic color (Natural Pellet; NP) of the pellets of the composition of the present invention, when the pellets exhibited the desired white color, it was marked as "X" (no discoloration). When discoloration was observed with the naked eye, it was marked as "O".
* f1 WOM (%): According to UL 746C (f1 Class) regulations, using an accelerated weathering tester (weather-O-meter, ATLAS Co., Ci4000, xenon arc lamp, Quartz (inner)/S.Boro (outer) filters, irradiance of 0.35 W/m² at 340 nm, black panel temperature of 60±3 °C) satisfying ASTM G151, a process of exposing an impact specimen to UV for 102 minutes and exposing the impact specimen to both UV and water spray for 18 minutes was set as 1 cycle, and an accelerated weathering test was performed for 1,000 hours. At this time, an f1 WOM value was expressed as the retention (%) of impact strength measured before and after the accelerated weathering test.
* f1 flame retardancy (WOM, grade): According to UL 746C (f1 Class) regulations, the specimen for measuring flame retardancy was subjected to the accelerated weathering test, and then the flame retardancy thereof was measured according to the flame retardancy measurement method.
* f1 hot water resistance index (%): A hot water resistance test was performed according to UL 746C (f1 Class) regulations. Specifically, the impact specimen was completely immersed in 70 °C deionized water and left for 7 days. Then, the impact specimen was immersed in 23 °C deionized water for 30 minutes. An impact strength retention rate measured before and after the hot water resistance test was expressed in %.
* f1 flame retardancy (hot water resistance, grade): According to UL 746C (f1 Class) regulations, the specimen for measuring flame retardancy was subjected to the hot water resistance test. Then, the specimen was additionally subjected to conditioning for 2 weeks under the conditions of a temperature of 23 °C and a relative humidity of 50 %. Then, flame retardancy was measured according to the flame retardancy test.

**[Table 1]**

| Classification (parts by weight) | Examples | | | | | | |
|---|---|---|---|---|---|---|---|
| | 1 | 2 | 3 | 4 | 5 | 6 | 7 |
| (A-a1) PBT | 49.3 | 49.7 | 48.3 | 49.7 | 48.6 | - | 49.3 |
| (A-a2) PBT | - | - | - | - | - | 49.3 | - |
| (A-a3) PBT | - | - | - | - | - | - | - |
| (A-b1) PC | 50.7 | 50.3 | 51.7 | 50.3 | 51.4 | 50.7 | - |
| (A-b2) PC | - | - | - | - | - | - | 50.7 |
| (A-b3) PC | - | - | - | - | - | - | - |
| (B-1) BA rubber-containing core-shell impact modifier | 6.7 | 6.0 | 8.8 | 6.6 | 6.8 | 6.7 | 6.7 |
| (B-2) Non-core-shell impact modifier | - | - | - | - | - | - | - |
| (C-a1) Brominated epoxy oligomer | 17.3 | 17.2 | 17.7 | 17.2 | 17.6 | 17.3 | 17.3 |
| (C-a2) Brominated aromatic carbonate oligomer | - | - | - | - | - | - | - |
| (C-b1) Sb₂O₃ | 4.0 | 4.0 | 4.1 | 4.0 | 4.1 | 4.0 | 4.0 |
| (D-1) E-GMA-VA | 2.7 | 2.6 | 2.7 | 2.0 | 4.1 | 2.7 | 2.7 |
| (D-2) E-GMA-BA | - | - | - | - | - | - | - |
| (E-1) NaH₂PO₄ | 0.4 | 0.4 | 0.4 | 0.4 | 0.4 | 0.4 | 0.4 |
| (E-2) Na₂HPO₄ | - | - | - | - | - | - | - |
| (E-3) Diphenyl phosphate | - | - | - | - | - | - | - |
| (F) Benzotriazole-based UV stabilizer | 0.4 | 0.4 | 0.4 | 0.4 | 0.4 | 0.4 | 0.4 |
| (G) Additional additives | 1.9 | 1.9 | 1.9 | 1.9 | 1.9 | 1.9 | 1.9 |

**[Table 2]**

| Classification (parts by weight) | Comparative Examples | | | | | | |
|---|---|---|---|---|---|---|---|
| | 1 | 2 | 3 | 4 | 5 | 6 | 7 |
| (A-a1) PBT | 50.6 | 50.3 | 50.0 | 49.3 | 49.3 | 50.6 | 49.3 |
| (A-a2) PBT | - | - | - | - | - | - | - |
| (A-a3) PBT | - | - | - | - | - | - | - |
| (A-b1) PC | 49.4 | 49.7 | 50.0 | 50.7 | 50.7 | 49.4 | 50.7 |
| (A-b2) PC | - | - | - | - | - | - | - |
| (A-b3) PC | - | - | - | - | - | - | - |
| (B-1) BA rubber-containing core-shell impact modifier | 6.5 | 6.5 | 6.6 | 6.7 | 6.7 | 3.9 | - |
| (B-2) Non-core-shell impact modifier | - | - | - | - | - | - | 6.7 |
| (C-a1) Brominated | 16.9 | 17.0 | 17.1 | 17.3 | - | 16.9 | 17.3 |
| epoxy oligomer | | | | | | | |
| (C-a2) Brominated aromatic carbonate oligomer | - | - | - | - | 17.3 | - | - |
| (C-b1) Sb₂O₃ | 3.9 | 3.9 | 3.9 | 4.0 | 4.0 | 3.9 | 4.0 |
| (D-1) E-GMA-VA | - | 0.7 | 1.3 | - | 2.7 | 2.6 | 2.7 |
| (D-2) E-GMA-BA | - | - | - | 2.7 | - | - | - |
| (E-1) NaH₂PO₄ | 0.4 | 0.4 | 0.4 | 0.4 | 0.4 | 0.4 | 0.4 |
| (E-2) Na₂HPO₄ | - | - | - | - | - | - | - |
| (E-3) Diphenyl phosphate | - | - | - | - | - | - | - |
| (F) Benzotriazole-based UV stabilizer | 0.4 | 0.4 | 0.4 | 0.4 | 0.4 | 0.4 | 0.4 |
| (G) Additional additives | 1.8 | 1.8 | 1.8 | 1.9 | 1.9 | 1.8 | 1.9 |

**[Table 3]**

| Classification (parts by weight) | Comparative Examples | | | | | | |
|---|---|---|---|---|---|---|---|
| | 8 | 9 | 10 | 11 | 12 | 13 | 14 |
| (A-a1) PBT | 47.6 | 49.3 | 47.9 | - | 49.3 | - | 49.3 |
| (A-a2) PBT | - | - | - | - | - | - | - |
| (A-a3) PBT | - | - | - | 49.3 | - | 49.3 | - |
| (A-b1) PC | 52.4 | 50.7 | 52.1 | - | 50.7 | 50.7 | - |
| (A-b2) PC | - | - | - | - | - | - | - |
| (A-b3) PC | - | - | - | 50.7 | - | - | 50.7 |
| (B-1) BA rubber-containing core-shell impact modifier | 10.3 | 6.7 | 6.8 | 6.7 | 6.7 | 6.7 | 6.7 |
| (B-2) Non-core-shell impact modifier | - | - | - | - | - | - | - |
| (C-a1) Brominated epoxy oligomer | 17.9 | 17.3 | 17.8 | 17.3 | 17.3 | 17.3 | 17.3 |
| (C-a2) Brominated aromatic carbonate oligomer | - | - | - | - | - | - | - |
| (C-b1) Sb₂O₃ | 4.1 | 4.0 | 4.1 | 4.0 | 4.0 | 4.0 | 4.0 |
| (D-1) E-GMA-VA | 2.8 | 2.7 | 5.5 | 2.7 | 2.7 | 2.7 | 2.7 |
| (D-2) E-GMA-BA | - | - | - | - | - | - | - |
| (E-1) NaH₂PO₄ | 0.4 | - | 0.4 | 0.4 | - | 0.4 | 0.4 |
| (E-2) Na₂HPO₄ | - | 0.4 | - | - | - | - | - |
| (E-3) Diphenyl phosphate | - | - | - | - | 0.4 | - | - |
| (F) Benzotriazole-based UV stabilizer | 0.4 | 0.4 | 0.4 | 0.4 | 0.4 | 0.4 | 0.4 |
| (G) Additional additives | 1.9 | 1.9 | 1.9 | 1.9 | 1.9 | 1.9 | 1.9 |

**[Table 4]**

| Classification | | Examples | | | | | | |
|---|---|---|---|---|---|---|---|---|
| | | 1 | 2 | 3 | 4 | 5 | 6 | 7 |
| Specific gravity | | 1.31 | 1.31 | 1.30 | 1.31 | 1.31 | 1.31 | 1.31 |
| Tensile strength (kgf/cm²) | | 549 | 555 | 529 | 558 | 535 | 546 | 538 |
| Flexural modulus (kgf/cm²) | | 21,600 | 21,800 | 20,300 | 21,700 | 21,200 | 21,850 | 21,650 |
| Flexural strength (kgf/cm²) | | 848 | 854 | 823 | 857 | 829 | 850 | 847 |
| Impact strength (kgf·cm/cm) | | 85 | 82 | 88 | 80 | 88 | 76 | 81 |
| Melt flow index (g/10 min) | | 8.4 | 8.8 | 7.3 | 9.0 | 7.1 | 12.6 | 12.8 |
| Flame retardancy | | V-0 | V-0 | V-0 | V-0 | V-0 | V-0 | V-0 |
| Whether discoloration occurs | | X | X | X | X | X | X | X |
| f 1 | Hot water resistance index (%) | 85.6 | 84.9 | 83.8 | 76.5 | 82.4 | 78.8 | 81.9 |
| | Hot water resistance/f lame retardancy | V-0 | V-0 | V-0 | V-0 | V-0 | V-0 | V-0 |
| | WOM (%) | 91.6 | 90.2 | 89.3 | 81.3 | 88.7 | 80.4 | 86.9 |
| | WOM flame retardancy | V-0 | V-0 | V-0 | V-0 | V-0 | V-0 | V-0 |

**[Table 5]**

| Classificat ion | | Comparative Examples | | | | | | |
|---|---|---|---|---|---|---|---|---|
| | | 1 | 2 | 3 | 4 | 5 | 6 | 7 |
| Specific gravity | | 1.32 | 1.32 | 1.31 | 1.31 | 1.31 | 1.32 | 1.31 |
| Tensile strength (kgf/cm²) | | 598 | 576 | 567 | 548 | 572 | 581 | 537 |
| Flexural modulus (kgf/cm²) | | 22,500 | 22,150 | 21,900 | 21,500 | 21,350 | 22,000 | 20,700 |
| Flexural strength (kgf/cm²) | | 896 | 877 | 868 | 845 | 884 | 887 | 826 |
| Impact strength (kgf·cm/cm) | | 16 | 38 | 71 | 84 | 72 | 71 | 80 |
| Melt flow index (g/10 min) | | 12.2 | 11.3 | 9.8 | 6.3 | 6.4 | 10.1 | 8.8 |
| Flame retardancy | | V-2 | V-2 | V-0 | V-2 | V-0 | V-0 | V-0 |
| Whether discolorati on occurs | | X | X | X | X | X | X | X |
| f 1 | Hot water resistan ce index (%) | 85.0 | 44.4 | 36.1 | 82.1 | 75.3 | 23.9 | 68.4 |
| | Hot water resistan ce/flame retardan cy | V-2 | V-2 | V-0 | V-2 | V-0 | V-0 | V-0 |
| | WOM (%) | 80.0 | 37.2 | 21.4 | 94.8 | 87.9 | 25.1 | 85.7 |
| | WOM flame retardan cy | V-2 | V-2 | V-0 | V-2 | V-0 | V-0 | V-0 |

**[Table 6]**

| Classificati on | | Comparative Examples | | | | | | |
|---|---|---|---|---|---|---|---|---|
| | | 8 | 9 | 10 | 11 | 12 | 13 | 14 |
| Specific gravity | | 1.29 | 1.31 | 1.30 | 1.31 | 1.31 | 1.31 | 1.31 |
| Tensile strength (kgf/cm²) | | 518 | 555 | 521 | 550 | 551 | 527 | 525 |
| Flexural modulus (kgf/cm²) | | 21,000 | 21,700 | 20,700 | 21,800 | 21,750 | 21,450 | 61,650 |
| Flexural strength (kgf/cm²) | | 814 | 859 | 813 | 851 | 860 | 816 | 846 |
| Impact strength | | 89 | 80 | 90 | 78 | 77 | 62 | 74 |
| (kgf·cm/cm) | | | | | | | | |
| Melt flow index (g/10 min) | | 5.8 | 7.1 | 5.7 | 12.4 | 12.9 | 17.1 | 15.9 |
| Flame retardancy | | V-2 | V-0 | V-0 | V-0 | V-0 | V-0 | V-0 |
| Whether discoloratio n occurs | | X | X | X | X | O | X | X |
| f 1 | Hot water resistan ce index (%) | 82.8 | 31.4 | 79.2 | 72.1 | 78.8 | 34.2 | 69.7 |
| | Hot water resistan ce/flame retardan cy | V-2 | V-0 | V-2 | V-0 | V-2 | V-0 | V-0 |
| | WOM (%) | 88.7 | 86.9 | 85.1 | 47.5 | 82.4 | 36.8 | 68.1 |
| | WOM flame retardan cy | V-2 | V-0 | V-0 | V-2 | V-0 | V-0 | V-2 |

As shown in Tables 1 to 6, the thermoplastic resin compositions of Examples 1 to 7 according to the present invention have a tensile strength of 529 kgf/cm² or more, a flexural modulus of 20,300 kgf/cm² or more, a flexural strength of 823 kgf/cm² or more, an impact strength of 76 kgf-cm/cm or more, a melt flow index of 7.1 g/10 min or more, and a flame retardancy grade of V-0. In addition, the thermoplastic resin compositions of Examples 1 to 7 have an impact strength retention rate of 76.5 % or more before and after a hot water resistance test and an impact strength retention rate of 80.4 % or more before and after an accelerated weathering test. In particular, the thermoplastic resin compositions of Examples 1 to 7 have no change in the flame retardancy grade thereof before and after the hot water resistance test and before and after the accelerated weathering test, indicating that the thermoplastic resin compositions of Examples 1 to 7 have excellent mechanical strength, molding processability, flame retardancy, hot water resistance, and weather resistance compared to Comparative Examples 1 to 14 outside the present invention.

In addition, in the case of discoloration, the pellets of Examples 1 to 7 were visually white, indicating that discoloration did not occur. On the other hand, the pellets of Comparative Example 12 had a distinct gray color visually, indicating that appearance was deteriorated.

Therefore, it can be confirmed that the thermoplastic resin composition of the present invention has mechanical strength, molding processability, and flame retardancy above a certain level and has excellent hot water resistance and weather resistance. Thus, the thermoplastic resin composition of the present invention may be applied to the manufacture of outdoor electrical products that are used for a long time.

## Claims

1. A thermoplastic resin composition, comprising: 100 parts by weight of a base resin (A) comprising 1 to 99 % by weight of a polyalkylene terephthalate and 1 to 99 % by weight of a polycarbonate;
5.5 to 9 parts by weight of an impact modifier (B) having a core-shell structure;
10 to 30 parts by weight of a halogenated epoxy-based flame retardant (C);
2 to 4.5 parts by weight of a compatibilizer (D); and
0.1 to 2 parts by weight of a transesterification inhibitor (E),
wherein the thermoplastic resin composition has a melt flow index of 7.0 g/10 min or more as measured at a temperature of 250 °C under a load of 5 kg according to ASTM D1238, and has a WOM value of 70 % or more as measured according to UL 746C (f1 Class) wherein the parameter WOM is defined as indicated in the specification.

2. The thermoplastic resin composition according to claim 1, wherein the thermoplastic resin composition has a hot water resistance index value of 50 % or more as measured according to UL 746C (f1 Class).

3. The thermoplastic resin composition according to claim 1, wherein the polyalkylene terephthalate has an intrinsic viscosity (I.V.) of 0.9 to 1.3 dl/g measured as indicated in the specification.

4. The thermoplastic resin composition according to claim 1, wherein the polycarbonate has a melt flow index of 1 to 11 g/10 min as measured at a temperature of 250 °C under a load of 5 kg according to ASTM D1238.

5. The thermoplastic resin composition according to claim 1, wherein the base resin comprises 40 to 60 % by weight of a polyalkylene terephthalate and 40 to 60 % by weight of a polycarbonate.

6. The thermoplastic resin composition according to claim 1, wherein the impact modifier having a core-shell structure is a butyl acrylic-based impact modifier.

7. The thermoplastic resin composition according to claim 1, wherein the halogenated epoxy-based flame retardant is a brominated epoxy-based flame retardant.

8. The thermoplastic resin composition according to claim 1, wherein the transesterification inhibitor is NaH₂PO₄.

9. The thermoplastic resin composition according to claim 1, wherein the thermoplastic resin composition comprises 2 to 8 parts by weight of a flame retardant aid.

10. The thermoplastic resin composition according to claim 9, wherein the flame retardant aid comprises antimony trioxide.

11. The thermoplastic resin composition according to claim 1, wherein the compatibilizer comprises a glycidyl methacrylate-based compatibilizer.

12. The thermoplastic resin composition according to claim 11, wherein the glycidyl methacrylate-based compatibilizer comprises vinyl acrylate.

13. The thermoplastic resin composition according to claim 1, wherein the thermoplastic resin composition comprises 0.05 to 3 parts by weight of a UV stabilizer.

14. The thermoplastic resin composition according to claim 1, wherein the thermoplastic resin composition satisfies f1 Class specified in UL 746.

15. A molded article manufactured using the thermoplastic resin composition according to any one of claims 1 to 14.

## Patentansprüche

1. Thermoplastische Harzzusammensetzung, umfassend:
100 Gewichtsteile eines Basisharzes (A), umfassend 1 bis 99 Gew.-% eines Polyalkylenterephthalats und 1 bis 99 Gew.-% eines Polycarbonats;
5,5 bis 9 Gewichtsteile eines Schlagzähigkeitsmodifikators (B) mit einer Kern-Schale-Struktur;
10 bis 30 Gewichtsteile eines halogenierten Flammschutzmittels auf Epoxidbasis (C);
2 bis 4,5 Gewichtsteile eines Verträglichkeitsvermittlers (D); und
0,1 bis 2 Gewichtsteile eines Umesterungsinhibitors (E),
wobei die thermoplastische Harzzusammensetzung einen Schmelzflussindex von 7,0 g/10 min oder mehr, wie bei einer Temperatur von 250 °C unter einer Last von 5 kg gemäß ASTM D1238 gemessen, aufweist und einen WOM-Wert von 70 % oder mehr, wie gemäß UL 746C (f1-Klasse) gemessen, aufweist, wobei der Parameter WOM wie in der Beschreibung angegeben definiert ist.

2. Thermoplastische Harzzusammensetzung nach Anspruch 1, wobei die thermoplastische Harzzusammensetzung einen Heißwasserbeständigkeitsindexwert von 50 % oder mehr, wie gemäß UL 746C (f1-Klasse) gemessen, aufweist.

3. Thermoplastische Harzzusammensetzung nach Anspruch 1, wobei das Polyalkylenterephthalat eine Grenzviskosität (I.V.) von 0,9 bis 1,3 dl/g, wie in der Beschreibung angegeben gemessen, aufweist.

4. Thermoplastische Harzzusammensetzung nach Anspruch 1, wobei das Polycarbonat einen Schmelzflussindex von 1 bis 11 g/10 min, wie bei einer Temperatur von 250 °C unter einer Last von 5 kg gemäß ASTM D1238 gemessen, aufweist.

5. Thermoplastische Harzzusammensetzung nach Anspruch 1, wobei das Basisharz 40 bis 60 Gew.-% eines Polyalkylenterephthalats und 40 bis 60 Gew.-% eines Polycarbonats umfasst.

6. Thermoplastische Harzzusammensetzung nach Anspruch 1, wobei der Schlagzähigkeitsmodifikator mit einer Kern-Schale-Struktur ein Schlagzähigkeitsmodifikator auf Butylacrylbasis ist.

7. Thermoplastische Harzzusammensetzung nach Anspruch 1, wobei das halogenierte Flammschutzmittel auf Epoxidbasis ein bromiertes Flammschutzmittel auf Epoxidbasis ist.

8. Thermoplastische Harzzusammensetzung nach Anspruch 1, wobei der Umesterungsinhibitor NaH₂PO₄ ist.

9. Thermoplastische Harzzusammensetzung nach Anspruch 1, wobei die thermoplastische Harzzusammensetzung 2 bis 8 Gewichtsteile eines Flammschutzmittels umfasst.

10. Thermoplastische Harzzusammensetzung nach Anspruch 9, wobei das Flammschutzmittel Antimontrioxid umfasst.

11. Thermoplastische Harzzusammensetzung nach Anspruch 1, wobei der Verträglichkeitsvermittler einen auf Glycidylmethacrylat basierenden Verträglichkeitsvermittler umfasst.

12. Thermoplastische Harzzusammensetzung nach Anspruch 11, wobei der auf Glycidylmethacrylat basierende Verträglichkeitsvermittler Vinylacrylat umfasst.

13. Thermoplastische Harzzusammensetzung nach Anspruch 1, wobei die thermoplastische Harzzusammensetzung 0,05 bis 3 Gewichtsteile eines UV-Stabilisators umfasst.

14. Thermoplastische Harzzusammensetzung nach Anspruch 1, wobei die thermoplastische Harzzusammensetzung die in UL 746 spezifizierte f1-Klasse erfüllt.

15. Formgegenstand, hergestellt unter Verwendung der thermoplastischen Harzzusammensetzung nach einem der Ansprüche 1 bis 14.

## Revendications

1. Composition de résine thermoplastique, comprenant :
100 parties en poids d'une résine de base (A) comprenant 1 à 99 % en poids d'un téréphtalate de polyalkylène et 1 à 99 % en poids d'un polycarbonate ;
5,5 à 9 parties en poids d'un modificateur d'impact (B) ayant une structure noyau-enveloppe ;
10 à 30 parties en poids d'un retardateur de flamme à base d'époxy halogéné (C) ;
2 à 4,5 parties en poids d'un agent de compatibilité (D) ; et
0,1 à 2 parties en poids d'un inhibiteur de transestérification (E),
dans laquelle la composition de résine thermoplastique a un indice de fluidité égal ou supérieur à 7,0 g/10 min, mesuré à une température de 250 °C sous une charge de 5 kg selon ASTM D1238, et a une valeur WOM égale ou supérieure à 70 %, mesurée selon UL 746C (Classe f1), dans laquelle le paramètre WOM est défini comme indiqué dans la spécification.

2. Composition de résine thermoplastique selon la revendication 1, dans laquelle la composition de résine thermoplastique a une valeur d'indice de résistance à l'eau chaude égale ou supérieure à 50 %, mesurée selon UL 746C (Classe f1).

3. Composition de résine thermoplastique selon la revendication 1, dans laquelle le téréphtalate de polyalkylène a une viscosité intrinsèque (I.V.) de 0,9 à 1,3 dl/g, mesurée comme indiqué dans la spécification.

4. Composition de résine thermoplastique selon la revendication 1, dans laquelle le polycarbonate a un indice de fluidité de 1 à 11 g/10 min, mesuré à une température de 250 °C sous une charge de 5 kg selon ASTM D1238.

5. Composition de résine thermoplastique selon la revendication 1, dans laquelle la résine de base comprend 40 à 60 % en poids d'un téréphtalate de polyalkylène et 40 à 60 % en poids d'un polycarbonate.

6. Composition de résine thermoplastique selon la revendication 1, dans laquelle le modificateur d'impact ayant une structure noyau-enveloppe est un modificateur d'impact à base d'acrylique de butyle.

7. Composition de résine thermoplastique selon la revendication 1, dans laquelle le retardateur de flamme à base d'époxy halogéné est un retardateur de flamme à base d'époxy bromé.

8. Composition de résine thermoplastique selon la revendication 1, dans laquelle l'inhibiteur de transestérification est NaH₂PO₄.

9. Composition de résine thermoplastique selon la revendication 1, dans laquelle la composition de résine thermoplastique comprend 2 à 8 parties en poids d'un auxiliaire de retardateur de flamme.

10. Composition de résine thermoplastique selon la revendication 9, dans laquelle l'auxiliaire de retardateur de flamme comprend un trioxyde d'antimoine.

11. Composition de résine thermoplastique selon la revendication 1, dans laquelle l'agent de compatibilité comprend un agent de compatibilité à base de méthacrylate de glycidyle.

12. Composition de résine thermoplastique selon la revendication 11, dans laquelle l'agent de compatibilité à base de méthacrylate de glycidyle comprend l'acrylate de vinyle.

13. Composition de résine thermoplastique selon la revendication 1, dans laquelle la composition de résine thermoplastique comprend 0,05 à 3 parties en poids d'un stabilisateur UV.

14. Composition de résine thermoplastique selon la revendication 1, dans laquelle la composition de résine thermoplastique satisfait à Classe f1 spécifiée dans UL 746.

15. Article moulé fabriqué en utilisant la composition de résine thermoplastique selon l'une quelconque des revendications 1 à 14.
